# EUROPÄISCHE PATENTSCHRIFT

(11) **EP 3 764 376 B1**
(45) Veröffentlichungstag und Bekanntmachung des Hinweises auf die Patenterteilung: **30.08.2023**
(21) Anmeldenummer: 19185742.4
(22) Anmeldetag: 11.07.2019
(51) Int. Cl.: H01F 27/02, H01F 37/00, H02H 9/08, H02J 3/18, H02M 1/00

(54) **KOMPENSATIONSEINRICHTUNG FÜR STROMVERSORGUNGSNETZE**
COMPENSATION DEVICE FOR POWER SUPPLY NETWORKS
DISPOSITIF DE COMPENSATION POUR RÉSEAUX D'ALIMENTATION ÉLECTRIQUE

(43) Veröffentlichungstag der Anmeldung: 13.01.2021
(73) Patentinhaber: Siemens Energy Global GmbH & Co. KG, 81739 München (DE)
(72) Erfinder: AMBEKAR, Sarvesh, 90429 Nürnberg (DE); LABINSKY, Robert, 8042 Graz-St. Peter (AT); KULKARNI, Shashank, 400607 Thane, Maharastra (IN)

(56) Entgegenhaltungen:
- CH-A- 226 098
- DE-U- 1 880 791
- US-A1- 2019 165 692

## Beschreibung

Stabile und wirtschaftliche Stromversorgungsnetze bilden das Rückgrat einer gesicherten Stromversorgung.

Wesentliche Elemente dafür sind Kompensationsdrosselspulen und Erdungsdrosseln.

Die US 2019/165692 A1 offenbart einen Umrichter, der über einen Transformator mit einem Wechselspannungsnetz verbunden ist. Zwischen dem Umrichter und dem Transformator sind Kompensationsdrosselspulen und eine Erdungsdrossel angeordnet, die in einem gemeinsamen Gehäuse angeordnet sind.

Kompensationsdrosselspulen werden für verschiedene Aufgaben eingesetzt:
Sie kompensieren kapazitive Blindleistungen der Übertragungsleitungen, die insbesondere bei schwach belasteten oder leerlaufenden Netzen auftreten, setzen netzfrequente Überspannungen bei plötzlichen Lastabwurf oder leerlaufendem Netz herab, und verbessern damit die Stabilität und Wirtschaftlichkeit der Energieübertragung.

Kompensations-Drosselspulen mit Ölfüllung werden typisch in zwei Bauarten hergestellt: mit durch Luftspalte unterteiltem Eisenkern oder ohne Eisenkern, mit magnetischem Rückschluss.

Damit können sie an individuelle Anforderungen bezüglich Spannung, Leistung, Betriebsart, Geräusch- und Verlustarmut, Anschlusstechnik, Kühlungsart sowie Transport und Aufstellung angepasst werden.

Wicklungen, Isolationsaufbau, Kessel, Überwachungsgeräte und Anschlusstechnik unterscheiden sich praktisch nicht von der Ausführung bei Transformatoren. Im Aufbau und in der Beherrschung bestimmter physikalisch bedingter Besonderheiten haben Kompensations-Drosselspulen jedoch eigenständige Merkmale.

Kompensations-Drosselspulen mit Ölfüllung werden im Allgemeinen mit sogenannter ONAN-Kühlung, d.h. mit natürlicher Konvektion der Umgebungsluft, oder bei großer Leistung auch mit ONAF-Kühlung, bei welcher der Luftstrom mittels Gebläse forciert wird, ausgeführt.

Sternpunkterdungsdrosseln dienen dazu, den Fehlerstrom bei nicht beabsichtigten Erdschlüssen eines Leiters in einem Wechselspannungssystem zu kompensieren.

Sie werden in diesem Zusammenhang nach ihrem Erfinder auch als Petersenspule oder als Erdschlusslöschspule, bzw. auch als statischer Luftkernreaktor bezeichnet.

Der Erfindung liegt die Aufgabe zugrunde, den Einsatz von Kompensationsdrosselspulen und Erdungsdrosseln zu verbessern.

Erfindungsgemäß geschieht dies mit einer Kompensationseinrichtung für Stromversorgungsnetze gemäß Anspruch 1. Vorteilhafte Ausgestaltungen ergeben sich aus den Unteransprüchen.

Die Erfindung wird anhand von Figuren näher erläutert.

Es zeigen beispielhaft:
Fig 1. schematisch die erfindungsgemäße Anordnung von Kompensationsdrosselspulen und Erdungsdrosseln.
Fig. 2 eine perspektivische Ansicht eines Teils der konstruktiven Ausführung der erfindungsgemäßen Kompensationseinrichtung in der Prüfungsphase.
Fig. 3 eine perspektivische Ansicht eines Teils der konstruktiven Ausführung der erfindungsgemäßen Kompensationseinrichtung in der Betriebsphase.
Fig. 4 die Anordnung der erfindungsgemäßen Kompensationseinrichtung in einer Seitenansicht und
Fig. 5 die Anordnung der erfindungsgemäßen Kompensationseinrichtung in Draufsicht,
Fig. 6 schematisch die erfindungsgemäße Anordnung von variablen Kompensationsdrosselspulen und Erdungsdrosseln
Fig.7 und Fig. 8 die Anordnung von variablen Kompensationsdrosselspulen und Erdungsdrosseln in Seitenansichten.

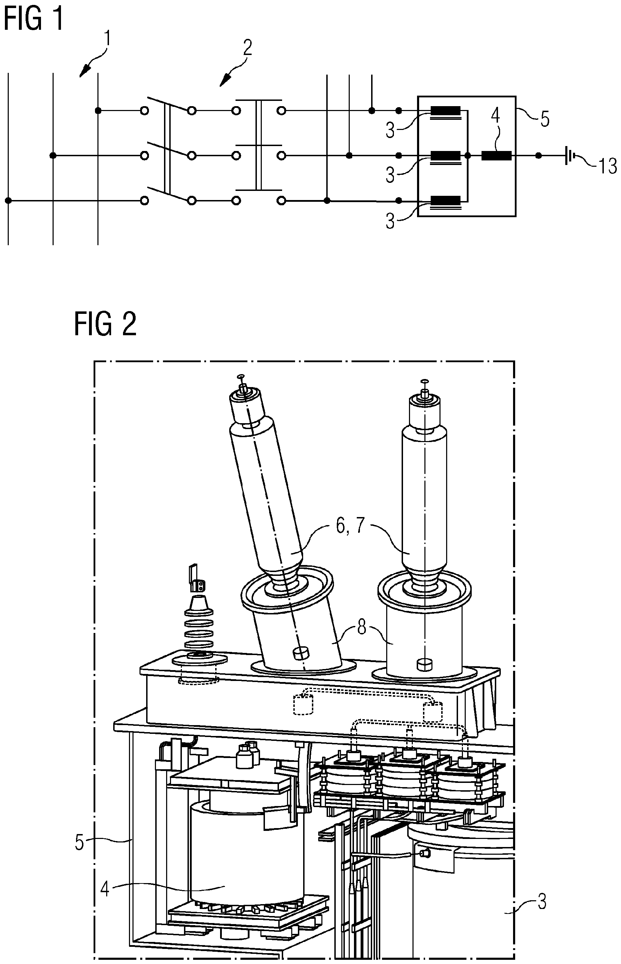

Die schematische Darstellung nach Fig. 1 umfasst eine dreiphasige Hochspannungsleitung 1 welche über Schaltvorrichtungen 2, Kompensationsdrosselspulen 3 und eine Erdungsdrossel 4 mit Erde verbunden ist. Erfindungsgemäß sind die Kompensationsdrosselspulen 3 und die Erdungsdrossel 4 in einem gemeinsamen Gehäuse 5 untergebracht.

Diese gemeinsame Anordnung bringt Platzvorteile mit sich, kann aber nicht ohne weiteres geprüft werden. Damit die vorschriftsmäßigen Prüfungen durchgeführt werden können, wird daher erfindungsgemäß die elektrische Verbindung zwischen Kompensationsdrosselspulen 3 und Erdungsdrossel 4 trennbar ausgeführt und während der Prüfung die Ableitungen des erdungsseitigen Anschlusses der Kompensationsdrosselspulen 3 sowie die Ableitung des spannungsseitigen Anschlusses der Erdungsdrossel 4 jeweils mit einer Testdurchführung 6, 7 verbunden.

Figur 2 zeigt in einer perspektivischen Ansicht einen Ausschnitt eines Teils der konstruktiven Ausführung der erfindungsgemäßen Kompensationseinrichtung. Die Darstellung zeigt einen Teil der Kompensationsdrosselspulen 3 und eine Erdungsdrossel 4, sowie zwei Testdurchführungen 6,7.

Die Testdurchführungen 6,7 können jeweils als einsteckbare Hochspannungsdurchführungen ausgebildet sein und mit ihrem Einsteckende in passende Durchführungssteckbuchsen 8 eingeführt werden. Diese Durchführungssteckbuchsen 8 sind fluiddicht an dem Gehäuse 5 befestigt, so dass der Innen- oder Ölraum der Kompensationseinrichtung hermetisch, also luft- und flüssigkeitsdicht von der Außenatmosphäre abgeschlossen ist.

Am geschlossenen Ende der Durchführungssteckbuchse ist ein Leitungsbolzen als Kontaktteil vorgesehen, der sich in das Innere des Gehäuses 5 erstreckt, und die elektrische Verbindung zu den Ableitungen von Kompensationsdrosselspulen 3 und Erdungsdrossel 4 bildet.

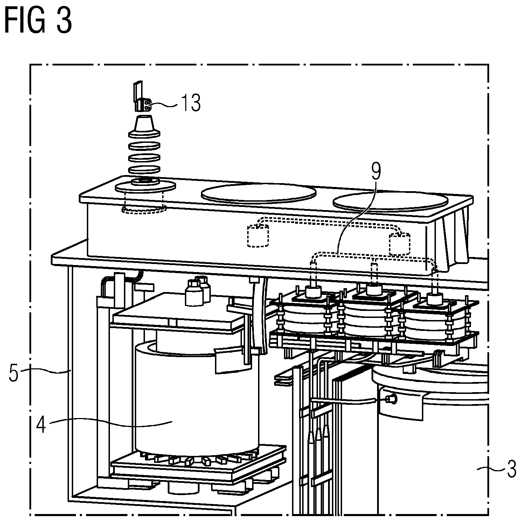

Wie in Fig. 3 dargestellt, werden die Testdurchführungen 6,7, nach der Prüfungsphase entfernt und die Ableitungen von Kompensationsdrosselspulen 3 und Erdungsdrossel 4 nach der Prüfung mit einem Kurzschlussbügel 9 in der Weise verbunden, dass Kompensationsdrosselspulen 3 und Erdungsdrossel 4 für den Betriebsfall in Serie geschaltet sind.

Diese Umrüstung beschränkt sich auf den oberen Teil der Kompensationseinrichtung, sodass dafür lediglich ein geringer Teil des Öls angelassen werden muss.

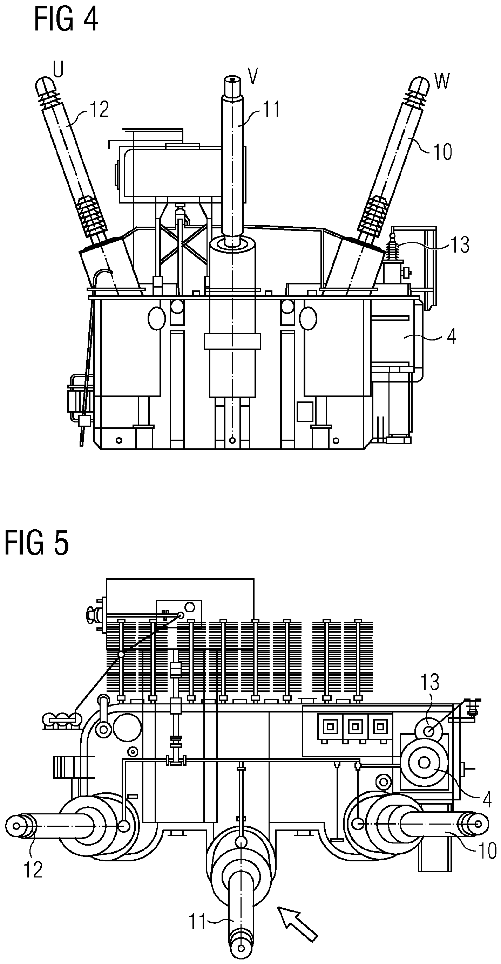

Die Figuren 4 und 5 zeigen die Anordnung der erfindungsgemäßen Kompensationseinrichtung in einer geschnittenen Seitenansicht und in Draufsicht. Die Testdurchführungen 5, 6 sind in dieser Darstellung bereits entfernt, lediglich die regulären Hochspannungsdurchführungen 10,11,12 zum Anschluss der Kompensationseinrichtung an die Übertragungsleitungen sind dargestellt. Weiterhin ist der Erdungsanschluss 13 dargestellt.

Die Erdungsdrossel 4 ist seitlich von den Kompensationsdrosselspulen 3 angeordnet.

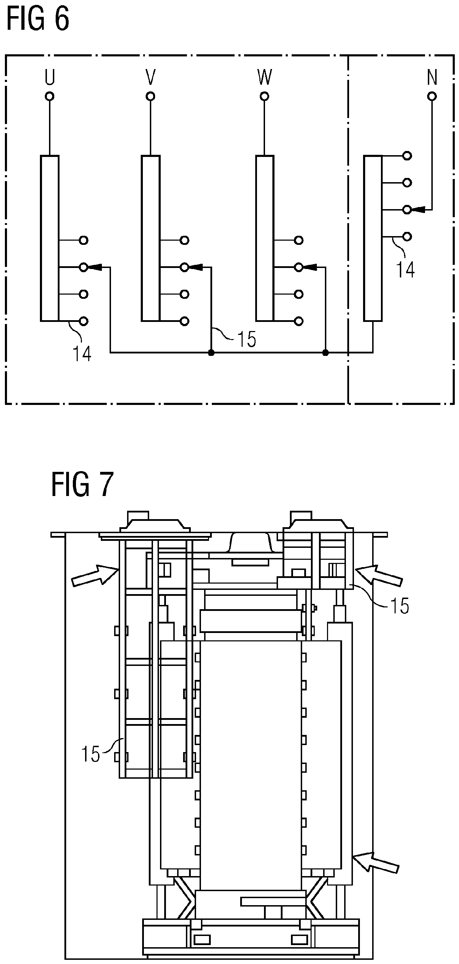

Wie in Fig. 6 schematisch dargestellt, ist die Erfindung auch für variable Kompensationsdrosselspulen 3 und Erdungsdrosseln anwendbar.

Dabei sind die Wicklungen der Drosseln mit mehreren Anzapfungen 14 versehen, die mit Hilfe von synchronisierten Stufenschaltern 15 angesteuert werden.

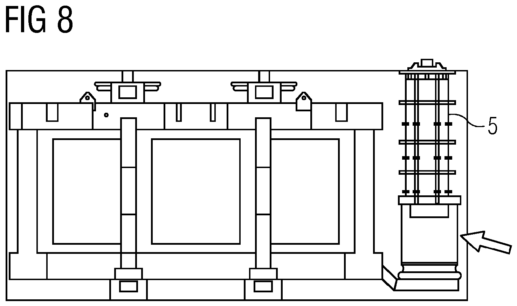

Wie in den Figuren 7 und 8 dargestellt, sind die Stufenschalter 15 ebenfalls in das gemeinsame Gehäuse integriert.

### Bezugszeichen

- 1: Hochspannungsleitung
- 2: Schaltvorrichtungen
- 3: Kompensationsdrosselspulen
- 4: Erdungsdrossel
- 5: Gehäuse
- 6,7: Testdurchführungen
- 8: Durchführungssteckbuchsen
- 9: Kurzschlussbügel
- 10,11,12: Hochspannungsdurchführungen
- 13: Erdungsanschluss
- 14: Anzapfungen
- 15: Stufenschalter

## Patentansprüche

1. Kompensationseinrichtung für Hochspannungsanlagen, welche Kompensationsdrosselspulen und zumindest eine Erdungsdrossel umfasst, wobei Kompensationsdrosselspulen (3) und die Erdungsdrossel (4) in einem gemeinsamen Gehäuse (5) untergebracht sind, **dadurch gekennzeichnet, dass** die elektrische Verbindung zwischen Kompensationsdrosselspulen (3) und Erdungsdrossel (4) trennbar ausgeführt ist.

2. Kompensationseinrichtung nach Anspruch 1, **dadurch gekennzeichnet, dass** die elektrische Verbindung zwischen Kompensationsdrosselspulen (3) und Erdungsdrossel (4) als Kurzschlussbügel (9) ausgeführt ist und im oberen Bereich des gemeinsamen Gehäuses (5) angebracht ist.

3. Kompensationseinrichtung nach Anspruch 1 oder 2, **dadurch gekennzeichnet, dass** variable Kompensationsdrosselspulen (3) und Erdungsdrosseln (4) vorgesehen sind, dass die Wicklungen der variablen Drosseln (3, 4) mit mehreren Anzapfungen (14) versehen sind, die mit synchronisierten Stufenschaltern (15) angesteuert werden.

4. Verfahren zur Verwendung einer Kompensationseinrichtung nach Anspruch 1, **dadurch gekennzeichnet, dass** während eines Prüfvorganges die elektrische Verbindung zwischen Kompensationsdrosselspulen (3) und Erdungsdrossel (4) getrennt ist, und dass die Ableitungen des erdungsseitigen Anschlusses der Kompensationsdrosselspulen (3) sowie die Ableitung des spannungsseitigen Anschlusses der Erdungsdrossel (4) jeweils mit einer Testdurchführung (6, 7) verbunden sind.

## Claims

1. Compensation device for high-voltage systems, which comprises shunt reactors and at least one earthing reactor, wherein the shunt reactors (3) and the earthing reactor (4) are accommodated in a common housing (5), **characterized in that** the electrical connection between the shunt reactors (3) and the earthing reactor (4) is designed to be interruptible.

2. Compensation device according to Claim 1, **characterized in that** the electrical connection between the shunt reactors (3) and the earthing reactor (4) is in the form of a short-circuiting link (9) and is fitted in the upper region of the common housing (5).

3. Compensation device according to Claim 1 or 2, **characterized in that** there is provision for variable shunt reactors (3) and earthing reactors (4), and **in that** the windings of the variable reactors (3, 4) are provided with a plurality of taps (14) which are controlled by synchronized tap changers (15).

4. Method for using a compensation device according to Claim 1, **characterized in that** the electrical connection between the shunt reactors (3) and the earthing reactor (4) is interrupted during an inspection operation, and **in that** the terminal leads of the earthing-side connection of the shunt reactors (3) and the terminal lead of the voltage-side connection of the earthing reactor (4) are each connected to a test bushing (6, 7) .

## Revendications

1. Dispositif de compensation pour des installations en haute tension, qui comprend des bobines d'inductance de compensation et au moins une bobine de mise à la terre, dans lequel des bobines (3) d'inductance de compensation et la bobine (4) de mise à la terre sont logées dans une enveloppe (5) commune, **caractérisé en ce que** la liaison électrique entre des bobines (3) d'inductance de compensation et des bobines (4) de mise à la terre est réalisée de manière à pouvoir être coupée.

2. Dispositif de compensation suivant la revendication 1, **caractérisé en ce que** la liaison électrique entre des bobines (3) d'inductance de compensation et des bobines (4) de mise à la terre est réalisée sous la forme d'un étrier (9) de court-circuit et est montée dans la partie supérieure de l'enveloppe (5) commune.

3. Dispositif de compensation suivant la revendication 1 ou 2, **caractérisé en ce qu'**il est prévu des bobines (3) d'inductance de compensation et des bobines (4) de mise à la terre variable **en ce que** les enroulements des bobines (3, 4) variables sont pourvues de plusieurs prises (14), qui sont commandées par des interrupteurs (15) synchronisés à étage.

4. Procédé d'utilisation d'un dispositif de compensation suivant la revendication 1, **caractérisé en ce que** pendant une opération de contrôle, la liaison électrique entre des bobines (3) d'inductance de compensation et des bobines (4) à la terre est coupée et **en ce que** les dérivations de la borne du côté de la mise à la terre des bobines (3) d'inductance de compensation ainsi que la dérivation de la borne du côté de la tension de la bobine (4) de mise à la terre sont reliées respectivement à une traversée (6, 7) de test.
